# EUROPEAN PATENT APPLICATION

(11) **EP 4 195 561 A1**
(43) Date of publication of application: **14.06.2023**
(21) Application number: 21852970.9
(22) Date of filing: 27.07.2021
(51) Int. Cl.: H04L 5/00

(54) **TRANSMISSION FAILURE RECOVERY METHOD AND APPARATUS, DEVICE, AND STORAGE MEDIUM**

(30) Priority: 07.08.2020 CN 202010790883
(71) Applicant: Datang Mobile Communications Equipment Co., Ltd., Beijing 100085 (CN)
(72) Inventor: SONG, Lei, Beijing 100085 (CN); CHEN, Runhua, Beijing 100085 (CN); GAO, Qiubin, Beijing 100085 (CN); SU, Xin, Beijing 100085 (CN)
(74) Representative: Studio Torta S.p.A.
(86) International application number: PCT/CN2021/108752
(87) International publication number: WO 2022/028279

(57) **Abstract**

The present application provides a transmission failure recovery method and apparatus, a device, and a storage medium. A reference signal corresponding to a group of control resource sets CORESETs or a transmission failure reference signal BFD RS set is determined; and a transmission failure recovery request is transmitted to a network device if the reference signal meets a predefined condition, where the transmission failure recovery request is used for indicating the network device to perform transmission failure recovery on the group of CORESETs. Since network device is triggered to enable a transmission failure recovery mechanism on a group of CORESETs when a reference signal corresponding to the group of CORESETs meets a predefined condition, a transmission delay for data on a transmission point with failed beam transmission is reduced, thereby improving communication quality.

## Description

This application claims priority to Chinese Patent Application No. 202010790883.6, filed to China National Intellectual Property Administration on August 7, 2020 and titled "Transmission Failure Recovery Method and Apparatus, Device, and Storage Medium", the disclosure of which is incorporated herein by reference in its entirety.

### TECHNICAL FIELD

The present application relates to the field of communication technology, and in particular, to a transmission failure recovery method and apparatus, a device, and a storage medium.

### BACKGROUND

In an NR system, a network device can, via beamforming technology, concentrate transmission power to a certain direction for a terminal device, to increase power of received signals. However, when a link between the network device and the terminal device is blocked, the receiving power of the terminal device will be greatly reduced, and thus a beam transmission failure event will be triggered. In view of the above situation, a transmission failure recovery mechanism is defined. That is, the terminal device, upon detection of a beam transmission failure event, reports the beam transmission failure event to the network device, and the network device makes a serving beam change for the terminal device so as to ensure normal data transmission.

In the prior art, the transmission failure recovery mechanism is cell-targeted. For a cell containing multiple transmission points (TRP, transmission point), the terminal device would trigger the transmission failure recovery mechanism only when the beam transmission between all the TRPs and the terminal device is failed. In this way, a relatively large transmission delay will be generated for data on the TRP with failed beam transmission.

### SUMMARY

The present application provides a transmission failure recovery method and apparatus, a device, and a storage medium, for reducing a transmission delay for data on a transmission point with failed beam transmission.

In a first aspect, the present application provides a transmission failure recovery method, applied to a terminal device. The method includes: determining a reference signal corresponding to a group of control resource sets CORESETs or a transmission failure reference signal BFD RS set; transmitting a transmission failure recovery request to a network device if the reference signal meets a predefined condition, where the transmission failure recovery request is used for indicating the network device to perform transmission failure recovery on the group of CORESETs.

Optionally, if the network device configures one BFD RS set for the terminal device in a bandwidth part, the reference signal is a part of BFD RSs contained in the BFD RS set; if the network device configures multiple BFD RS sets for the terminal device in a bandwidth part, the reference signal is all of the BFD RSs contained in one BFD RS set, and a different CORESET corresponds to a different BFD RS set.

Optionally, the CORESET corresponds to at least one reference signal, and the reference signal is at least one of the following signals: a reference signal, among reference signals monitored by the terminal device, associated with a transmission configuration indication TCI state for the group of CORESETs, where the group of CORESETs includes CORESETs with same first higher-layer parameter configuration; or a part of reference signals associated with a TCI state for CORESETs monitored by the terminal device.

Optionally, the transmission failure recovery request indicating the network device to perform the transmission failure recovery on the group of CORESETs includes at least one of the following manners: a signal type of the transmission failure recovery request indicates the network device to perform the transmission failure recovery on the group of CORESETs; a transmission resource of the transmission failure recovery request indicates the network device to perform the transmission failure recovery on the group of CORESETs; or the transmission failure recovery request carries indication information which is used for indicating the network device to perform the transmission failure recovery on the group of CORESETs.

Optionally, the indication information includes: identification information of the group of CORESETs and related information of a set of the reference signal corresponding to the group of CORESETs; where the related information of the set of the reference signal corresponding to the group of CORESETs is at least one of the following: a set index of a transmission failure reference signal BFD RS set of the reference signal corresponding to the group of CORESETs; an index of a reference signal in a BFD RS set of the reference signal corresponding to the group of CORESETs; or a value of a higher-layer parameter for a control resource set group CORESETs of the reference signal corresponding to the group of CORESETs.

Optionally, the transmission resource includes at least one of the following: a physical random access channel PRACH, a physical uplink control channel PUCCH or a physical uplink shared channel PUSCH; where the transmission resource of the transmission failure recovery request indicating the network device to perform the transmission failure recovery on the group of CORESETs includes at least one of the following: indicating, according to an association between the PRACH and a higher-layer parameter or a BFD RS set corresponding to the CORESET group with failed transmission, the network device to perform the transmission failure recovery on the CORESET group; or indicating, according to an association between the PUCCH and a higher-layer parameter or a BFD RS set corresponding to the CORESET group with failed transmission, the network device to perform the transmission failure recovery on the CORESET group.

Optionally, the network device is indicated, respectively through a physical random access channel PRACH and a physical uplink shared channel PUSCH or medium access control control element MAC CE signaling, to perform transmission failure recovery on different CORESET groups; or the network device is indicated, respectively through the PRACH and a physical uplink control channel PUCCH, to perform transmission failure recovery on different CORESET groups; or the network device is indicated, respectively through the PUSCH or the MAC CE signaling and the PUCCH, to perform transmission failure recovery on different CORESET groups.

Optionally, the network device is indicated, through the PRACH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or the network device is indicated, through the PRACH, to perform transmission failure recovery on all CORESET groups in a cell, and the network device is indicated, through the PUSCH or the MAC CE signaling, to perform transmission failure recovery on a CORESET group with a higher-layer parameter value of 1 or 0.

Optionally, the network device is indicated, through the PRACH, to perform transmission failure recovery on a CORESET group with a higher-layer parameter value of 0, and the network device is indicated, through the PUCCH, to perform transmission failure recovery on a CORESET group with a higher-layer parameter value of 1; and/or the network device is indicated, through the PRACH, to perform transmission failure recovery on all CORESET groups in a cell, and the network device is indicated, through the PUCCH, to perform transmission failure recovery on a CORESET group with a higher-layer parameter value of 1 or 0.

Optionally, the network device is indicated, through the PUCCH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or the network device is indicated, through the PUCCH, to perform transmission failure recovery on a CORESET group with a higher-layer parameter value of 1, and the network device is indicated, through the PUSCH or the MAC CE signaling, to perform transmission failure recovery on a CORESET group with a higher-layer parameter value of 0.

Optionally, before determining the reference signal corresponding to the group of CORESETs, the method further includes: determining whether transmission failure recovery reporting is performed for a group of CORESETs; if it is determined that the transmission failure recovery reporting is performed for a group of CORESETs, proceeding with execution of determining the reference signal corresponding to the group of CORESETs.

Optionally, the determining whether the transmission failure recovery reporting is performed for a group of CORESETs includes at least one of the following: determining, according to a value of a higher-layer parameter configured by the network device, that transmission failure recovery reporting is performed for a group of CORESETs; determining, according to the number of transmission failure reference signal sets corresponding to a bandwidth part configured by the network device, that transmission failure recovery reporting is performed for a group of CORESETs; or determining, according to the number of higher-layer parameter values for control resource sets CORESETs monitored by the terminal device, that transmission failure recovery reporting is performed for a group of CORESETs.

In a second aspect, the present application provides a transmission failure recovery method, applied to a network device. The method includes: receiving a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; performing transmission failure recovery on the group of CORESETs according to the transmission failure recovery request.

Optionally, the performing the transmission failure recovery on the group of CORESETs according to the transmission failure recovery request includes: if transmission failure recovery reporting is performed for a CORESET group, performing CORESET-level transmission failure recovery on the group of CORESETs; or if transmission failure recovery reporting is not for a group of CORESETs, performing cell-level transmission failure recovery on a cell.

In a third aspect, the present application provides a transmission failure recovery apparatus, including: a determining module, configured to determine a reference signal corresponding to a group of control resource sets CORESETs or a transmission failure reference signal BFD RS set; a transmitting module, configured to transmit a transmission failure recovery request to a network device when the reference signal meets a predefined condition, where the transmission failure recovery request is used for indicating the network device to perform transmission failure recovery on the group of CORESETs.

In a fourth aspect, the present application provides a transmission failure recovery apparatus, including: a receiving module, configured to receive a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; a recovery module, configured to perform transmission failure recovery on the group of CORESETs according to the transmission failure recovery request.

In a fifth aspect, the present application provides a terminal device, including: a memory, a processor, and a program stored in the memory and running on the processor. The processor, when executing the program, implements the following steps: determining a reference signal corresponding to a group of control resource sets CORESETs or a transmission failure reference signal BFD RS set; transmitting a transmission failure recovery request to a network device if the reference signal meets a predefined condition, where the transmission failure recovery request is used for indicating the network device to perform transmission failure recovery on the group of CORESETs.

Optionally, if the network device configures one BFD RS set for the terminal device in a bandwidth part, the reference signal is a part of BFD RSs contained in the BFD RS set; if the network device configures multiple BFD RS sets for the terminal device in a bandwidth part, the reference signal is all of the BFD RSs contained in one BFD RS set, and a different CORESET group corresponds to a different BFD RS set.

Optionally, the group of CORESETs corresponds to at least one reference signal, and the reference signal is at least one of the following signals: a reference signal, among reference signals monitored by the terminal device, associated with a transmission configuration indication TCI state for the group of CORESETs, where the group of CORESETs includes CORESETs with same first higher-layer parameter configuration; or a part of reference signals associated with a TCI state for CORESETs monitored by the terminal device.

Optionally, the transmission failure recovery request indicating the network device to perform the transmission failure recovery on the group of CORESETs includes at least one of the following manners: a signal type of the transmission failure recovery request indicates the network device to perform the transmission failure recovery on the group of CORESETs; a transmission resource of the transmission failure recovery request indicates the network device to perform the transmission failure recovery on the group of CORESETs; or the transmission failure recovery request carries indication information which is used for indicating the network device to perform the transmission failure recovery on the group of CORESETs.

Optionally, the indication information includes: identification information of the group of CORESETs and related information of a set of the reference signal corresponding to the group of CORESETs; where the related information of the set of the reference signal corresponding to the group of CORESETs is at least one of the following: a set index of a transmission failure reference signal BFD RS set of the reference signal corresponding to the group of CORESETs; an index of a reference signal in a BFD RS set of the reference signal corresponding to the group of CORESETs; or a value of a higher-layer parameter for a control resource set group CORESETs of the reference signal corresponding to the group of CORESETs.

Optionally, the transmission resource includes at least one of the following: a physical random access channel PRACH, a physical uplink control channel PUCCH or a physical uplink shared channel PUSCH; where the transmission resource of the transmission failure recovery request indicating the network device to perform the transmission failure recovery on the group of CORESETs includes at least one of the following: indicating, according to an association between the PRACH and a higher-layer parameter or a BFD RS set corresponding to the CORESET group with failed transmission, the network device to perform the transmission failure recovery on the CORESET group; or indicating, according to an association between the PUCCH and a higher-layer parameter or a BFD RS set corresponding to the CORESET group with failed transmission, the network device to perform the transmission failure recovery on the CORESET group.

Optionally, the network device is indicated, respectively through a physical random access channel PRACH and a physical uplink shared channel PUSCH or medium access control control element MAC CE signaling, to perform transmission failure recovery on different CORESET groups; or the network device is indicated, respectively through the PRACH and a physical uplink control channel PUCCH, to perform transmission failure recovery on different CORESET groups; or the network device is indicated, respectively through the PUSCH or the MAC CE signaling and the PUCCH, to perform transmission failure recovery on different CORESET groups.

Optionally, the network device is indicated, through the PRACH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or the network device is indicated, through the PRACH, to perform transmission failure recovery on all CORESET groups in a cell, and the network device is indicated, through the PUSCH or the MAC CE signaling, to perform transmission failure recovery on a CORESET group with a higher-layer parameter value of 1 or 0.

Optionally, the network device is indicated, through the PRACH, to perform transmission failure recovery on a CORESET group with a higher-layer parameter value of 0, and the network device is indicated, through the PUCCH, to perform transmission failure recovery on a CORESET group with a higher-layer parameter value of 1; and/or the network device is indicated, through the PRACH, to perform transmission failure recovery on all CORESET groups in a cell, and the network device is indicated, through the PUCCH, to perform transmission failure recovery on a CORESET group with a higher-layer parameter value of 1 or 0.

Optionally, the network device is indicated, through the PUCCH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or the network device is indicated, through the PUCCH, to perform transmission failure recovery on a CORESET group with a higher-layer parameter value of 1, and the network device is indicated, through the PUSCH or the MAC CE signaling, to perform transmission failure recovery on a CORESET group with a higher-layer parameter value of 0.

Optionally, before determining the reference signal corresponding to the group of CORESETs, the following are further included: determining whether transmission failure recovery reporting is performed for a group of CORESETs; if it is determined that the transmission failure recovery reporting is performed for a group of CORESETs, proceeding with execution of determining the reference signal corresponding to the group of CORESETs.

Optionally, the determining whether the transmission failure recovery reporting is performed for a group of CORESETs includes at least one of the following: determining, according to a value of a higher-layer parameter configured by the network device, that transmission failure recovery reporting is performed for a group of CORESETs; determining, according to the number of transmission failure reference signal sets corresponding to a bandwidth part configured by the network device, that transmission failure recovery reporting is performed for a group of CORESETs; or determining, according to the number of higher-layer parameter values for control resource sets CORESETs monitored by the terminal device, that transmission failure recovery reporting is performed for a group of CORESETs.

In a sixth aspect, the present application provides a network device, including: a memory, a processor, and a program stored in the memory and running on the processor. The processor, when executing the program, implements the following steps: receiving a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; performing transmission failure recovery on the group of CORESETs according to the transmission failure recovery request.

Optionally, the performing the transmission failure recovery on the group of CORESETs according to the transmission failure recovery request includes: if transmission failure recovery reporting is performed for a group of CORESETs, performing CORESET-level transmission failure recovery on the group of CORESETs; or if transmission failure recovery reporting is not for a group of CORESETs, performing cell-level transmission failure recovery on a cell.

In a seventh aspect, the present application provides a processor-readable storage medium in which a computer program is stored, where the computer program is configured to enable the processor to perform any method according to the embodiments of the present application.

The present application provides the transmission failure recovery method and apparatus, the device, and the storage medium. A reference signal corresponding to a group of control resource sets CORESETs or a transmission failure reference signal BFD RS set is determined; and a transmission failure recovery request is transmitted to a network device if the reference signal meets a predefined condition, where the transmission failure recovery request is used for indicating the network device to perform transmission failure recovery on the CORESET group. Since a network device is triggered to enable a transmission failure recovery mechanism on a group of CORESETs when the reference signal corresponding to the group of CORESETs or a transmission failure reference signal BFD RS set meets a predefined condition, a transmission delay for data on a transmission point with failed beam transmission is reduced, thereby improving communication quality.

It will be appreciated that the above-described content described in the summary section is not intended to limit key or important features of the embodiments of the present application, nor to limit the scope of the present application. Other features of the present application will become readily comprehensible with the following description.

### □ BRIEF DESCRIPTION OF DRAWINGS

FIG. 1 is an example diagram of a scenario for transmission failure recovery according to an embodiment of the present application.
FIG. 2 is a flowchart of a transmission failure recovery method according to an embodiment of the present application.
FIG. 3 is a schematic diagram of transmission failure recovery request reporting according to an embodiment of the present application.
FIG. 4 is a schematic diagram of transmission failure recovery request reporting according to another embodiment of the present application.
FIG. 5 is a schematic diagram of transmission failure recovery request reporting according to still another embodiment of the present application.
FIG. 6 is a flowchart of a transmission failure recovery method according to still another embodiment of the present application.
FIG. 7 is a schematic structural diagram of a transmission failure recovery apparatus according to an embodiment of the present application.
FIG. 8 is a schematic structural diagram of a transmission failure recovery apparatus according to another embodiment of the present application.
FIG. 9 a schematic structural diagram of a terminal device according to an embodiment of the present application.
FIG. 10 is a schematic structural diagram of a network device according to an embodiment of the present application.

### DESCRIPTION OF EMBODIMENTS

In order to describe objections, technical solutions, and advantages of embodiments of the present application more clearly, the technical solutions in the embodiments of the present application will be described hereunder clearly and comprehensively with reference to the accompanying drawings in the embodiments of the present application. Apparently, the described embodiments are only a part of embodiments of the present application, rather than all embodiments of the present application. All other embodiments obtained by persons of ordinary skill in the art based on the embodiments of the present application without any creative effort shall fall into the protection scope of the present application.

In a new radio (New Radio, NR) system, when a high frequency band is used for transmission, physical channels and physical signals may use beamforming technology to improve quality of data transmission. Through the beamforming technology, the network device side enables concentration of transmission power to a certain direction, such as a direction where the terminal is located, to increase power of received signals. However, when a link between the network device side and the terminal is blocked, the receiving power on the terminal side will be greatly reduced, and thus a beam transmission failure event will be triggered. A transmission failure recovery mechanism, also known as a link recovery (link recovery) mechanism, is defined in the NR system. The terminal, upon detection of a transmission failure event, reports the transmission failure event to the network device side, and then the network device side makes a serving beam change for the terminal so as to ensure normal transmission.

Optionally, the NR system also may be termed as a 5G system or a 5G network. In the prior art, the transmission failure recovery mechanism is performed for a whole cell. In a case where a cell contains multiple transmission points (transmission point, TRP), according to the existing transmission failure recovery mechanism, the terminal will be triggered to transmit a transmission failure recovery request only when the transmission between all the TRPs and the terminal is failed (that is, reference signals (reference signal, RS) associated with all PDCCHs are lower than a specific threshold). When transmission failure occurs to only one TRP, that is, RSs associated with only a part of PDCCHs in a cell is below a specific threshold, the transmission failure recovery mechanism will not be triggered. Therefore, the terminal can enable the transmission failure recovery mechanism only when all the TRPs are subjected to transmission failures, or can perform communication normally only when the transmission between the failed TRP and the terminal is recovered. In this way, a relatively large transmission delay will be generated for data transmission on the failed TRP.

Based on the above problem, the present application proposes a transmission failure recovery method and apparatus, a device, and a storage device. When a transmission failure occurs in a control resource set CORESET corresponding to one of TRPs, the terminal can be triggered to perform transmission failure recovery reporting, and the transmission failure recovery reporting carries information of the CORESET where the transmission failure occurs, so that the network device side may determine, according to the information carried in the reporting, a link where the transmission failure occurs, and then perform transmission failure recovery on the link, thereby avoiding generation of a transmission latency.

It is to be illustrated that, in the present application, beam failure is equivalent to transmission failure, and is also equivalent to link failure, such as a link failure between a TRP or a cell and a terminal. Failure is also equivalent to deactivation, and various descriptions and their meanings are interchangeable in later description.

Description will be made hereunder with specific embodiments.

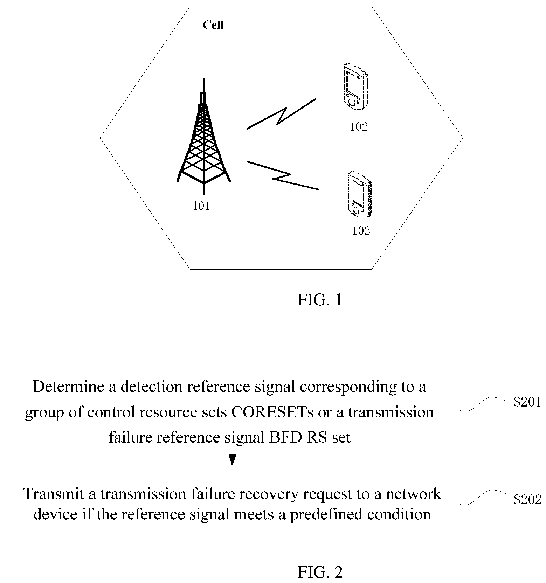

FIG. 1 is an example diagram of a scenario for transmission failure recovery according to an embodiment of the present application. As shown in FIG. 1, description is made by taking an example where this scenario includes a network device 101 and two terminal devices 102. It will be appreciated that the network device 101 may include other quantities of terminal devices within its coverage, which is not specifically limited in the present application. The network device 101 may be a device that communicates with a terminal device 102 (or known as a communication terminal or a terminal). The network device 102 may provide communication coverage for a specific geographic area, and may communicate with the terminal device located within the coverage area.

The network device 101 configures or predefines a group of transmission failure reference signal (BFD RS) sets for terminal devices in each serving cell. Reference signals in this set are used to reflect beam (TCI (transmission configuration indication, transmission configuration indication) state) quality of a physical downlink control channel (PDCCH). When all the reference signals contained in this set have a received power lower than a specific threshold, the physical layer of the terminal device 102 will indicate a transmission failure event to the higher-layer of the terminal. When the number of transmission failures reaches a certain number within a certain time, the terminal device 102 will be triggered to transmit a transmission failure recovery request to the network device 101. If the terminal device 102 identifies a new available beam, information related to the new beam may also be included in the transmission failure recovery request. After receiving the transmission failure recovery request transmitted by the terminal device 102, the network device 101 may enable a change with regard to a new serving beam for the terminal.

In one implementation, the network device involved in the embodiments of the present application may be a base station which may include multiple cells. Depending on a specific application scenario, the base station can also be termed as an access point, or refer to a device in an access network that communicates with a wireless terminal device over an air interface through one or more sectors, or named otherwise. The network device can be configured to make a conversion between a received air frame and an Internet protocol (internet protocol, IP) packet, and used as a router between the wireless terminal device and a remainder of the access network, where the remainder of the access network may include an Internet protocol (IP) communication network. The network device can also coordinate the attribute management of the air interface. For example, the network device involved in the embodiments of the present application may be a network device (base transceiver station, BTS) in a global system for mobile communications (global system for mobile communications, GSM) or a code division multiple access (code division multiple access, CDMA), or a network device (NodeB) in wide-band code division multiple access (wide-band code division multiple access, WCDMA), or an evolutional a network device (evolutional node B, eNB or e-NodeB) in a long term evolution (long term evolution, LTE) system, or a 5G base station in a 5G network architecture (next generation system), or a home evolved node B (home evolved node B, HeNB), or a relay node (relay node), or a femtocell (femto), or a picocell (pico), or the like, which is not limited in the embodiments of the present application.

In another implementation, the terminal device provided in the embodiments of the present application can also be termed as user equipment or the like. The combination of terminals includes but is not limited to handheld devices or vehicle-mounted devices. For example, the terminal device may be a mobile phone, a tablet, a laptop, an ultramobile personal computer (UltraMobile Personal Computer, UMPC), a netbook, a personal digital assistant (Personal Digital Assistant, PDA), or the like, which is not limited in the embodiments of the present application.

FIG. 2 is a flowchart of a transmission failure recovery method according to an embodiment of the present application. The transmission failure recovery method is applied to a terminal device. As shown in FIG. 2, the method includes the following steps.

S201: determine a reference signal corresponding to a group of control resource sets CORESETs or a transmission failure reference signal BFD RS set.

Specifically, in a cell, CORESETs are grouped according to a higher-layer parameter CORESETPoolIndex corresponding to each CORESET, a group of CORESETs including the higher-layer parameter CORESETPoolIndex that have the same value correspond to one TRP, and each group of CORESETs has one BFD RS set or multiple BFD RSs.

S202: transmit a transmission failure recovery request to a network device if the reference signal meets a predefined condition.

In practical applications, firstly, it is determined that whether a reference signal in a group of CORESETs meets a predefined condition, where the reference signal meeting the predefined condition may include:
the number of times that a measured value of the reference signal is above or below a preset threshold being greater than a preset number of times within a preset time, where the measured value includes receiving power and/or receiving quality, and the preset time can be configured by a network terminal.

For example, when receiving power and/or receiving quality of a group of CORESETs is below the preset threshold, one transmission failure is denoted. The number of transmission failures for the group of CORESETs within the preset time is acquired. When that number is greater than the preset number, it is determined that the reference signal corresponding to the group of CORESETs meets the predefined condition. The preset number of times and the preset threshold can be set according to actual needs. The preset number of times in terms of its value and the preset threshold in terms of its magnitude are not specifically limited in this embodiment.

Furthermore, when the reference signal corresponding to the group of CORESETs meets the predefined condition, a transmission failure recovery request is transmitted to a network device. The transmission failure recovery request is used for indicating the network device to perform transmission failure recovery on the group of CORESETs.

Correspondingly, the network device receives the transmission failure recovery request and performs, according to the transmission failure recovery request, transmission failure recovery on the TPR corresponding to the CORESET group.

According to the transmission failure recovery method provided in the embodiment of the present application, a reference signal corresponding to a group of control resource sets CORESETs or a transmission failure reference signal BFD RS set is determined; and a transmission failure recovery request is transmitted to a network device if the reference signal meets a predefined condition, where the transmission failure recovery request is used for indicating the network device to perform transmission failure recovery on the CORESET group. Since a network device is triggered to perform transmission failure recovery on a TPR corresponding to a CORESET group when a reference signal corresponding to the CORESET group or a transmission failure reference signal BFD RS set meets a predefined condition, a transmission delay for data on a transmission point with failed beam transmission is reduced, thereby improving communication quality.

In practical applications, if a transmission failure recovery mechanism of multiple TPRs is introduced, CORESET groups corresponding to the multiple TPRs occupy the same bandwidth part. With the existing BFD RS set determining method and transmission failure detecting method, only transmission failure events of all CORESET groups in a cell can be detected, and transmission failure events of a single TPR cannot be detected. Therefore, it is necessary to configure a corresponding BFD RS for the CORESET group corresponding to each TPR, so as to perform respective transmission failure recovery on the CORESET group corresponding to each TPR.

The configuration of the reference signal corresponding to the CORESET group will be described hereunder in conjunction with the following embodiments.

In practical applications, the correspondence between a group of CORESETs and a reference signal is pre-configured by the network device or is predefined. The reference signal is a part of or all of BFD RSs contained in a transmission failure reference signal BFD RS set.

In an implementation, the correspondence between a group of CORESETs and a reference signal being pre-configured by the network device may include any one of the following:
(1) if the network device configures one BFD RS set for the terminal device in one bandwidth part, the reference signal is a part of BFD RSs contained in the BFD RS set;
   exemplarily, if one BFD RS set nevertheless contains at most two RSs, it can be specified in advance that the first RS is associated with the first TPR and the second RS is associated with the second TPR; in practical applications, the number of reference signals in the BFD RS set for one bandwidth part can also be set according to actual needs, for example, reference signals in the BFD RS set for one bandwidth part can be 4, and each TRP is associated with 2 reference signals; for another example, reference signals in the BFD RS set for one bandwidth part can be 3, 2 preceding reference signals are associated with the first CORESET group, and the third reference signal is associated with the second CORESET group. The number of reference signals in the BFD RS set for one bandwidth part is not specifically limited in this embodiment. Before the configuration by the network device, the BFD RS(s) of the first or second CORESET group is configured at the corresponding position according to a predetermined association between BFD RSs in one BFD RS set and a CORESET group. In this method, since the BFD RSs of multiple CORESET groups are configured in one BFD RS set: when the measured value of the BFD RS(s) associated with a group of CORESETs meets a certain condition, the physical layer of the terminal will indicate to the higher-layer that a transmission failure has occurred to the group of CORESETs; when the measured values of all BFD RSs meet a certain condition, the physical layer of the terminal will also indicate to the higher-layer that a transmission failure has occurred to all TPRs (that is, a cell); and
(2) if the network device configures multiple BFD RS sets for the terminal device in one bandwidth part, the reference signal is all BFD RSs contained in one BFD RS set, and a different CORESET group corresponds to a different BFD RS set.

Exemplarily, each bandwidth part is configured with two or more BFD RS sets, and each BFD RS set is associated with a group of CORESETs. For example, the first BFD RS set on one bandwidth part is associated with the first group of CORESETs, and the second BFD RS set is associated with the second group of CORESETs. During configuration, each BFD RS set may also contain a value of a higher-layer parameter CORESETPoolIndex related to a CORESET group, and this value indicates a correspondence between CORESET groups and BFD RS sets.

In another implementation, a group of CORESETs corresponds to at least one reference signal. By predefining the correspondence between the group of CORESETs and the reference signal(s), it is possible to include any one of the following:
(1) a reference signal, among reference signals monitored by the terminal device, associated with a transmission configuration indication TCI state for the group of CORESETs, where the group of CORESETs includes CORESETs with same first higher-layer parameter configuration; and
(2) a part of reference signals associated with a TCI state for the CORESET group monitored by the terminal device.

Exemplarily, the terminal device determines that the BFD RS set of a cell is the reference signal(s) associated with the TCI state for a CORESET to monitor where a PDCCH is located. Two BFD RSs are included, the terminal device determines that one of the two BFD RSs is associated with the first CORESET and the other one of the two BFD RSs is associated with the second CORESET. The association is determined according to whether the higher-layer parameter of the CORESET to monitor where the PDCCH is located is the same as the higher-layer parameter of CORESETs in the CORESET group. For example, the first BFD RS is determined according to the TCI state of CORESET i to be monitored, the higher-layer parameter CORESETPoolIndex of CORESET i is configured to be 0, and thus the first BFD RS is associated with the first CORESET. For another example, the existing technology can also be extended. For example, more than two BFD RSs is determined through a predefined rule, e.g., three or four. In this way, the number of BFD RSs associated with each TRP can also be increased accordingly, thereby increasing detection accuracy.

According to the transmission failure recovery method provided in the embodiment of the present application, a BFD RS set corresponding to a group of CORESETs is determined and a transmission failure event for the group of CORESETs is monitored according to the BFD RS set corresponding to the group of CORESETs, so that the network device can be triggered to enable a transmission failure recovery mechanism for a corresponding transmission point of the group of CORESETs when the transmission failure event occurs to the group of CORESETs, thereby reducing the transmission delay of data on a transmission point with failed beam transmission and improving communication quality.

Further, on the basis of the above method embodiments, the transmission failure recovery request indicates the network device to perform transmission failure recovery on a transmission point corresponding to a CORESET group. Specifically, by means of carrying, in the transmission failure recovery request, information related to a CORESET group with occurrence of a transmission failure event, the network device, after receiving the transmission failure recovery request, determines a group of CORESETs with occurrence of the transmission failure event according to the information carried in the transmission failure recovery request, so as to perform transmission failure recovery on the transmission point corresponding to the group of CORESETs.

The process of transmitting the transmission failure recovery request will be described hereunder in conjunction with the following embodiments.

In downlink transmission, each group of CORESETs may be configured with a respective higher-layer parameter CORESETPoolIndex, which has a value of 0 or 1. CORESET groups with higher-layer parameters having the same value correspond to the same TPR or a TPR group. When the higher-layer parameters have two values, it indicates that there are two TPRs or two TPR groups in a cell.

Therefore, the transmission failure recovery request may carry information of higher-layer parameter values, or information of BFD RSs (e.g., RS index) configured for a CORESET group with failed transmission, or information of a BFD RS set (e.g., a set index, an index of an RS in the set, or other indexes included in the BFD RS set), so that the network device side can distinguish between transmission points with failed transmission.

The transmission failure recovery request can be associated with the higher-layer parameter CORESETPoolIndex. A case where a PCell or a PSCell or a SCell contains multiple TRPs will be described hereunder in conjunction with the following embodiments.

In practical applications, the CORESET group-related information carried in the transmission failure recovery request may include at least one of the following manners:
(1) a signal type of the transmission failure recovery request indicates the network device to perform the transmission failure recovery on the CORESET group;
(2) a transmission resource of the transmission failure recovery request indicates the network device to perform the transmission failure recovery on the CORESET group; or
(3) the transmission failure recovery request carries indication information which is used for indicating the network device to perform the transmission failure recovery on a transmission point to be monitored.

In conjunction with the following embodiments, description is made hereunder to the process in manner (1) where a signal type of the transmission failure recovery request indicates the network device to perform the transmission failure recovery on the CORESET group.

Specifically, the signal type may also include a channel type. Specifically, the signal type may include at least one of the following:
a preamble (preamble) or a PRACH channel, medium access control element MAC CE signaling or a PUSCH channel, a link recovery request LRR or a PUCCH channel.

Further, different transmission failure events being indicated by different signal types may include at least one of the following:
I. the network device is indicated, respectively through the physical random access channel PRACH and the physical uplink shared channel PUSCH or the medium access control control element MAC CE signaling, to perform transmission failure recovery on different CORESET groups;
II. the network device is indicated, respectively through the PRACH and the physical uplink control channel PUCCH, to perform transmission failure recovery on different CORESET groups; or
III. the network device is indicated, respectively through the PUSCH or the MAC CE signaling and the PUCCH, to perform transmission failure recovery on different CORESET groups.

Method I will be further described hereunder in conjunction with the following embodiments. Method I may include at least one of the following methods.

Method 1: the network device is indicated, through the PRACH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1.

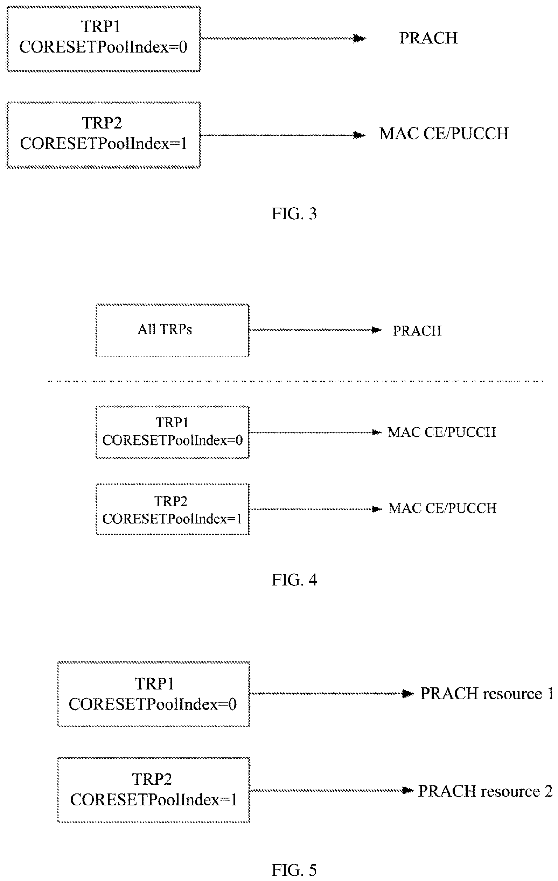

For ease of comprehension, description is made in conjunction with FIG. 3. FIG. 3 is a schematic diagram of transmission failure recovery request reporting according to an embodiment of the present application. As shown in FIG. 3, a PRACH is used to transmit a TRP transmission failure event associated with a CORESET group for which a higher-layer parameter is configured with 0, and a PUSCH or MAC CE signaling is used to carry information of a CORESET group with a higher-layer parameter value of 1.

The above method can be applied to a PCell or a PSCell, for example, when the PCell or the PSCell contains multiple CORESET groups. In this way, when receiving a PRACH signal transmitted by the terminal for the beam failure recovery request, the network device side can determine that a beam failure occurs to the CORESET group of the PCell or the PSCell with the value of 0. Similarly, when receiving a cell ID of the PCell or the PSCell contained in or associated with the MAC CE signaling or the PUCCH transmitted by the terminal, or information containing a higher-layer signaling value or a BFD RS set, the network device side can determine that a beam failure occurs to the CORESET group of the PCell or the PSCell for which the higher-layer signaling value is 0.

Method 2: the network device is indicated, through the PRACH, to perform transmission failure recovery on all transmission points in a cell, and the network device is indicated, through the PUSCH resource or the MAC CE signaling, to perform transmission failure recovery on a CORESET group with a higher-layer parameter value of 1 or 0.

CORESET groups corresponding to all transmission points include the following situations:
(1) a CORESET group with a higher-layer parameter value of 0, a CORESET group with a higher-layer parameter value of 1, and a CORESET group without a higher-layer parameter being configured;
(2) all CORESET groups without a higher-layer parameter being configured;
(3) all CORESET groups with the same higher-layer parameter value of 0 or 1.

When a group of CORESETs is not configured with the higher-layer parameter CORESETPoolIndex, it can be considered that the CORESETPoolIndex value is 0, that is, in the subsequent description of the present invention, the CORESET group with the CORESETPoolIndex value of 0 includes a CORESET group with the higher-layer parameter CORESETPoolIndex being configured as 0, and a CORESET group without the higher-layer parameter CORESETPoolIndex being configured.

For ease of comprehension, reference may be made to FIG. 4, which is a schematic diagram of transmission failure recovery request reporting according to another embodiment of the present application. As shown in FIG. 4, information of all CORESET groups in a cell is carried through a PRACH, and information of a CORESET group with a higher-layer parameter value of 1 or 0 is carried through a PUSCH or MAC CE signaling.

The above method can be applied to a PCell or a PSCell, for example, when the PCell or the PSCell contains multiple CORESET groups. In this way, in a case where a beam failure occurs to all TRPs under the PCell or the PSCell: when receiving a PRACH signal transmitted by the terminal for the beam failure recovery request, the network device side can determine that a transmission failure occurs to all CORESET groups of the PCell or the PSCell. When receiving information of a higher-layer parameter value or a BFD RS set contained in the MAC CE signaling transmitted by the terminal, the network device side can determine that a beam failure occurs to a corresponding CORESET group of the PCell or the PSCell for which the higher-layer parameter value is a specific value.

Method II will be further described hereunder in conjunction with the following embodiments. Specifically, Method II may include any one of the following methods.

Method 1: the network device is indicated, through the PRACH, to perform transmission failure recovery on a CORESET group with a higher-layer parameter value of 0, and the network device is indicated, through the PUCCH, to perform transmission failure recovery on a CORESET group with a higher-layer parameter value of 1.

With continued reference to FIG. 3, a PRACH is used to transmit a TRP transmission failure event associated with a CORESET group for which a higher-layer parameter is configured with 0, and a PUCCH is used to carry information of a CORESET group with a higher-layer parameter value of 1.

The above method can be applied to a PCell or a PSCell, for example, when the PCell or the PSCell contains multiple CORESET groups. In this way, when receiving a PRACH signal transmitted by the terminal for the beam failure recovery request, the network device side can determine that a beam failure occurs to the CORESET group of the PCell or the PSCell for which the higher-layer parameter value is 0. Similarly, when receiving a PUCCH signal transmitted by the terminal, the network device side can determine that a beam failure occurs to the CORESET group of the PCell or the PSCell for which the higher-layer parameter value is 1.

Method 2: the network device is indicated, through the PRACH, to perform transmission failure recovery on all CORESET groups in a cell, and the network device is indicated, through the PUCCH, to perform transmission failure recovery on a CORESET group with a higher-layer parameter value of 1 or 0.

Specifically, with continued reference to FIG. 4, as shown in FIG. 4, information of all CORESET groups in a cell is carried using a PRACH, and information of a CORESET group with a higher-layer parameter value of 1 or 0 is carried using a PUCCH.

The above method can be applied to a PCell or a PSCell, for example, when the PCell or the PSCell contains multiple CORESET groups. In this way, in a case where a beam failure occurs to all TRPs under the PCell or the PSCell: when receiving a PRACH signal transmitted by the terminal for the beam failure recovery request, the network device side can determine that a transmission failure occurs to all CORESET groups of the PCell or the PSCell. When receiving a PUCCH signal transmitted by the terminal for the beam failure recovery request, the network device side can determine that a beam failure occurs to a corresponding CORESET group of the PCell or the PSCell for which the higher-layer parameter value is a specific value.

Method III will be further described hereunder in conjunction with the following embodiments. Method III may include at least one of the following methods.

Method 1: the network device is indicated, through the PUCCH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1.

Specifically, the PUCCH carries information of the CORESET group with the higher-layer parameter value of 0, and the PUSCH or the MAC CE signaling carries information of the CORESET group with the higher-layer parameter value of 1.

Method 2: the network device is indicated, through the PUCCH, to perform transmission failure recovery on a CORESET group with a higher-layer parameter value of 1, and the network device is indicated, through the PUSCH or the MAC CE signaling, to perform transmission failure recovery on a CORESET group with a higher-layer parameter value of 0.

Similar to Method 1, the PUCCH carries information of the CORESET group with the higher-layer parameter value of 1, and the PUSCH or the MAC CE signaling carries information of the CORESET group with the higher-layer parameter value of 0.

In conjunction with the following embodiments, description is made hereunder to the process in manner (2) where a transmission resource of the transmission failure recovery request indicates the network device to perform the transmission failure recovery on the CORESET group.

The transmission resource includes at least one of the following: a physical random access channel PRACH, a physical uplink control channel PUCCH or a physical uplink shared channel PUSCH.

Further, different transmission failure events being indicated by different transmission resources may include at least one of the following.

Method 1: the network device is indicated, according to an association between the PRACH and a higher-layer parameter or a BFD RS set corresponding to at least one group of failed CORESETs, to perform the transmission failure recovery on the CORESET group.

Specifically, a PRACH transmission resource is associated with the higher-layer parameter or the BFD RS set corresponding to one or more failed CORESET groups.

For ease of comprehension, description is made in conjunction with FIG. 5. FIG. 5 is a schematic diagram of transmission failure recovery request reporting according to still another embodiment of the present application. As shown in FIG. 5, when a beam failure occurs to any TRP under the PCell or the PSCell, the terminal uses PRACH resources to report the beam failure recovery request. A respective different new candidate beam list (candidateBeamRSList) can be configured for each CORESETPoolIndex value. When receiving the PRACH transmitted by the terminal, the network device side determines, according to an association between a resource used for PRACH transmission and candidate beam information, candidate beam information associated therewith, and then determines a corresponding higher-layer parameter or BFD RS set according to an association between the candidate beam information and the higher-layer parameter or the BFD RS set, so that the CORESET group (with the higher-layer parameter value being 0 or 1) or TRP transmitting the beam failure recovery request can be determined.

Specifically, a respective different new candidate beam list is configured for each higher-layer parameter value or BFD RS set. The method for configuring the beam candidate list may include at least one of the following:
(1) configure two or more new candidate beam lists (candidateBeamRSListl, candidateBeamRSList2), where each list contains information of a higher-layer parameter value or a BFD RS set;
(2) configure two or more new candidate beam lists (candidateBeamRSListl, candidateBeamRSList2), where each list does not contain information of a higher-layer parameter value or a BFD RS set, and the association between two or more new beam candidate lists and information of higher-layer parameter values or the BFD RS set is pre-defined in advance in the protocol. For example, candidateBeamRSList1 is a corresponding candidate beam list when the higher-layer parameter value is 0, and candidateBeamRSList2 is a corresponding candidate beam list when the higher-layer parameter value is 1; alternatively, candidateBeamRSList i (i is the number of the list) is associated with BFD RS set j; or
(3) each reference signal in the new candidate beam list can be associated with information of a higher-layer parameter value or a BFD RS set.

Method 2: the network device is indicated, according to an association between the PUCCH and a higher-layer parameter or a BFD RS set corresponding to a CORESET group with failed transmission, to perform the transmission failure recovery on the CORESET group.

Specifically, a PUCCH transmission resource is associated with information of the higher-layer parameter value or the BFD RS set corresponding to one or more failed CORESET groups. The association between the PUCCH transmission resource and the information of the higher-layer parameter value or the BFD RS set corresponding to one or more failed CORESET groups is similar to Method 1. The network device is indicated, according to the association between the PUCCH and the information of the higher-layer parameter or the BFD RS set corresponding to the CORESET group(s) with failed transmission, to perform the transmission failure recovery on the CORESET group(s), which is also similar to Method 1. For details, reference may be made to the embodiments as shown in Method 1, which will not be repeated here.

In this way, after receiving the beam failure recovery request transmitted by the terminal, the network device side can determine, according to resources used for the beam failure recovery request, a TRP with occurrence of the beam failure. Therefore, the network device side can make a serving beam change for the TRP with occurrence of the beam failure, thereby recovering the communication quality.

In conjunction with the following embodiments, description is made hereunder to the process in manner (3) where the transmission failure recovery request carries indication information which is used for indicating the network device to perform the transmission failure recovery on a transmission point to be monitored.

The transmission failure recovery request carrying the indication information includes the following manner:
the MAC CE signaling containing information of the higher-layer parameter CORESETPoolIndex of one or more failed CORESET groups or the BFD RS set configured for one or more COFESETs.

Exemplarily, when a PUSCH resource is used to transmit the beam failure recovery request, the information of the higher-layer parameter value or the BFD RS set corresponding to a TRP with occurrence of a beam failure can be directly added into the MAC CE signaling, or a bitmap manner can be used to report the information of the higher-layer parameter value or the BFD RS set corresponding to all TRPs with occurrence of the beam failure. Other reporting manners can also be used. The manner in which the information of the higher-layer parameter value or the BFD RS set is reported is not limited in the present invention.

For another example, when the beam failure recovery request is reported by transmitting an LRR, schedulingRequestIDForBFR configured by the higher-layer signaling can be associated with the information of the CORESETPoolIndex value or the BFD RS set. Specifically, information of different CORESETPoolIndex values or BFD RS sets can be associated with different PUCCH resources. In this way, after receiving the beam failure recovery request transmitted by the terminal, the network device side can determine a TRP with occurrence of a beam failure according to the indication information contained in the beam failure recovery request, so as to make a serving beam change for the TRP with occurrence of the beam failure, thereby recovering the communication quality.

According to the method provided in the embodiment of the present application, related information of a CORESET group with occurrence of a transmission failure event is carried in a transmission failure recovery request, and the network device, after receiving the transmission failure recovery request, determines the CORESET group with occurrence of the transmission failure event according to information carried in the transmission failure recovery request, so that the network can interrupt transmission failure recovery on a transmission point corresponding to the CORESET group, thereby reducing the transmission delay of data at the transmission point with failed beam transmission and improving the communication quality.

In an implementation, the transmission failure recovery may include: transmission failure recovery at a CORESET group level and transmission failure recovery at a non-CORESET group level (i.e., cell level). For a terminal configured with two or more TRPs (two or more CORESET groups), the terminal should determine a BFD RS set according to a predefined rule if there is no explicitly configured BFD RS set. At this point, it is unclear to the terminal that whether the terminal should determine a BFD RS set corresponding to a cell and conduct subsequent cell-level beam failure detection and reporting, or determine a BFD RS or a BFD RS set corresponding to a TRP and conduct subsequent TRP-level beam failure detection and reporting, or conduct both cell-level and TRP-level beam failure detection and reporting. In addition, if the behavior of the physical layer of the terminal is not agreed in advance, the higher-layer of the terminal cannot know whether the cell or which TRP has a beam failure when the physical layer of the terminal reports a beam failure event to the higher-layer of the terminal, and thus cannot determine which beam failure recovery request should be initiated. Therefore, a mechanism is needed to enable the network device side, the physical layer of the terminal, and the higher-layer of the terminal to know whether the current beam failure recovery is targeted at a cell or a specific TRP.

In the method shown in FIG. 2, before step S201 of determining a reference signal corresponding to a group of control resource sets CORESET or a transmission failure reference signal BFD RS set, it is also necessary to determine whether transmission failure recovery reporting is performed for a group of CORESETs. In practical applications, transmission failure recovery may include transmission failure recovery reporting for a group of CORESETs and transmission failure recovery reporting for a cell. Different transmission failure recovery mechanisms will be triggered for different recovery reporting types. In conjunction with the following embodiments, description will be made hereunder in terms of determining whether transmission failure recovery reporting is performed for a group of CORESETs.

Specifically, determining whether transmission failure recovery reporting is performed for a group of CORESETs includes at least one of the following manners.
(1) Determining, according to a higher-layer parameter value configured by the network device, that transmission failure recovery reporting is performed for a group of CORESETs.

Specifically, when the higher-layer parameter configured for all CORESET groups in a cell has two values, it is determined that the transmission failure recovery reporting is performed for a group of CORESETs. However, whether to use a single transmission point or multiple transmission points for transmission may change dynamically, and the use of semi-static signaling to control transmission failure recovery may be inaccurate. For example, although the network device side configures multiple CORESET groups, only the transmission point corresponding to one CORESET group is used during the actual transmission to serve the terminal. At this point, it is meaningless if the terminal performs reporting for the transmission point corresponding to a non-operative CORESET group and enables a transmission failure recovery mechanism. Therefore, the present scheme can be further elaborated. Description is made hereunder to the elaboration of the present scheme in conjunction with (2).

(2) Determining, according to the number of transmission failure reference signal sets corresponding to a bandwidth part configured by the network device, that transmission failure recovery reporting is performed for a group of CORESETs.

Specifically, a separate determination is made for each monitoring occasion. Exemplarily, the configuration of all CORESET groups in a cell contains two different higher-layer parameter values. At a current monitoring occasion, the terminal device only monitors the CORESET group(s) for which the higher-layer parameter value is 0, the terminal device only performs transmission failure detection on the first CORESET group, and notifies a failure event to the higher-layer of the terminal device if a certain condition is met, where what is contained in the notification is whether this reporting is performed for the entire cell or the first CORESET group or the second CORESET group, and then it is determined that the transmission failure recovery reporting is performed for a group of CORESETs; if the configuration of all CORESET groups in a cell only includes one higher-layer parameter value, it can be determined that the transmission failure recovery reporting is not for a group of CORESETs, but for the cell.

(3) Determining, according to the number of transmission failure reference signal sets corresponding to a bandwidth part configured by a network device, that transmission failure recovery reporting is performed for a group of CORESETs.

Exemplarily, the BFD RS set configuration can be explicitly specified as mandatory configuration, that is, non-configuration is not allowed, that is to say, there is no longer an optional configuration. When the number of BFD RS sets configured in one bandwidth part is greater than or equal to 2, it is determined that the transmission failure recovery reporting is performed for a group of CORESETs; when the number of BFD RS sets configured in one bandwidth part is 1, it is determined that the transmission failure recovery reporting is not for a group of CORESETs but for the cell.

In practical applications, the above three methods for confirming the type of transmission failure recovery reporting can be applied to a case where the correspondence between a group of CORESETs and reference signals are pre-configured by a network device, or can be applied to a case where the correspondence between a group of CORESETs and reference signals is predefined. This is not specifically limited in the embodiment. In addition, the above three methods can be used separately or combined with each other, which is not specifically limited in the embodiment.

Further, if it is determined that the transmission failure recovery reporting is performed for a group of CORESETs and that the reference signal(s) meets a predefined condition, the transmission failure recovery detection and reporting will be performed for the CORESET group.

In other implementations, if the transmission failure recovery reporting is at a level of transmission failure recovery reporting for a group of CORESETs (that is, cell-targeted transmission failure recovery reporting) and the reference signal(s) meets a preset transmission failure trigger condition, the transmission failure recovery detection and reporting is cell-targeted.

According to the transmission failure recovery method provided in the embodiment of the present application, it is determined that whether the transmission failure recovery reporting is performed for a group of CORESETs, and then a reference signal corresponding to a group of control resource sets CORESETs or a transmission failure reference signal BFD RS set is determined. If the transmission failure recovery reporting is performed for a group of CORESETs and the reference signal(s) meets a predefined condition, then transmission failure recovery detection and reporting are performed for a group of CORESETs; if the transmission failure recovery reporting is at a level not for a group of CORESETs and the reference signal(s) meets a predefined condition, the transmission failure recovery detection and reporting will be performed for the cell. By determining the type of transmission failure recovery reporting, a network device can be triggered to determine different transmission failure recovery mechanisms according to the reporting type, thereby reducing the data transmission delay resulting from the failed beam transmission and improving the communication quality.

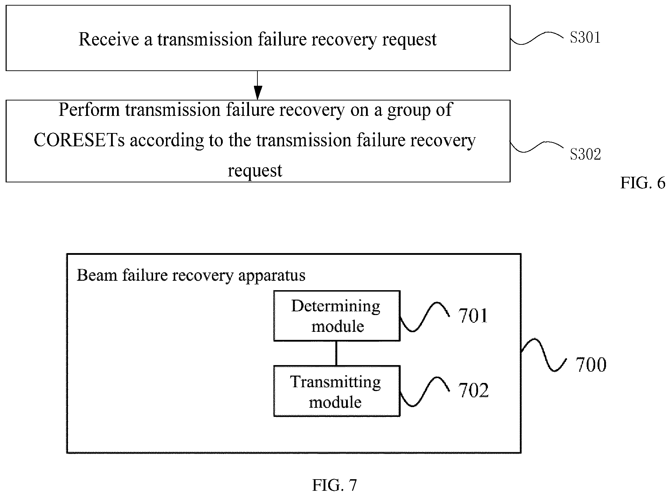

FIG. 6 is a flowchart of a transmission failure recovery method according to still another embodiment of the present application. The transmission failure recovery method is applied to a network device. As shown in FIG. 6, the transmission failure recovery may include the following steps.

S301, receive a transmission failure recovery request.

The transmission failure recovery request is transmitted by the terminal device when the terminal device determines that a reference signal corresponding to a group of control resource sets CORESETs or a transmission failure reference signal BFD RS set meets a predefined condition.

Specifically, the scheme for the terminal device to determine whether a reference signal corresponding to a group of control resource sets CORESETs or a transmission failure reference signal BFD RS set meets a predefined condition is similar to the scheme shown in FIG. 2. Reference may be made to the embodiment provided in FIG. 2 for details, which will not be described here again.

S302, perform transmission failure recovery on the group of CORESETs according to the transmission failure recovery request.

In practical applications, the transmission failure recovery may include: performing the transmission failure recovery reporting for a group of CORESETs, and performing transmission failure recovery reporting for a cell. Among them, different transmission failure recovery mechanisms can be triggered for different reporting types. The transmission failure recovery will be further explained hereunder in conjunction with the following embodiments.

In an implementation, if transmission failure recovery reporting is performed for a group of CORESETs, transmission failure recovery is performed on the group of CORESETs.

In another implementation, if transmission failure recovery reporting is not for a group of CORESETs (that is, cell-targeted transmission failure recovery reporting), transmission failure recovery is performed on a cell.

The transmission failure recovery method provided in the embodiment of the present application is applied to a network terminal. Firstly, a transmission failure recovery request is received, and then transmission failure recovery is performed on a group of CORESETs according to the transmission failure recovery request. When a reference signal corresponding to a group of CORESETs meets a predefined condition, a network device can be triggered to enable a transmission failure recovery mechanism for the CORESET group, thereby reducing the transmission delay of data at a transmission point with failed beam transmission and improving the communication quality.

FIG. 7 is a schematic structural diagram of a transmission failure recovery apparatus according to an embodiment of the present application. As shown in FIG. 7, the transmission failure recovery apparatus 700 includes:
a determining module 701, configured to determine a reference signal corresponding to a group of control resource sets CORESETs or a transmission failure reference signal BFD RS set; and
a transmitting module 702, configured to transmit a transmission failure recovery request to a network device when the reference signal meets a predefined condition, where the transmission failure recovery request is used for indicating a network device to perform transmission failure recovery on the group of CORESETs.

Here, it should be noted that the above apparatus provided in the present application can realize all the method steps realized by a terminal device in the above method embodiments and can achieve the same technical effect. For the same part and beneficial effect in the present embodiment as those in the method embodiments, details will be omitted here for the sake of redundancy.

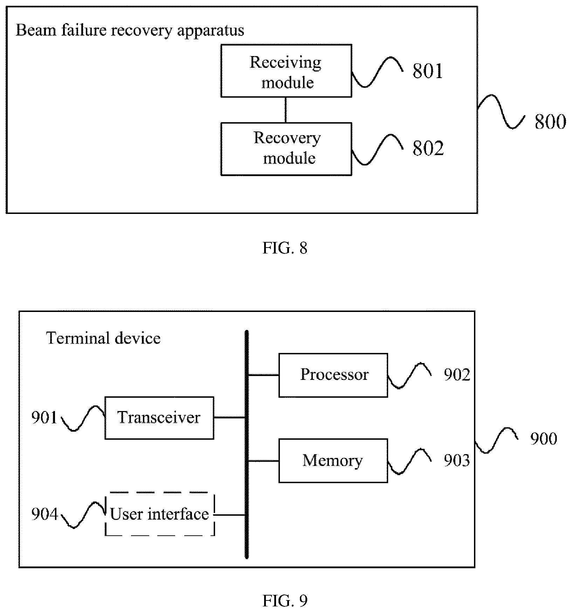

FIG. 8 is a schematic structural diagram of a transmission failure recovery apparatus according to another embodiment of the present application. As shown in FIG. 8, the transmission failure recovery apparatus 800 includes:
a receiving module 801, configured to receive a transmission failure recovery request, where the transmission failure recovery request is transmitted by a terminal device when the terminal device determines is determined that a reference signal corresponding to a group of control resource sets CORESETs or a transmission failure reference signal BFD RS set meets a predefined condition;
a recovery module 802, configured to perform transmission failure recovery on the group of CORESETs according to the transmission failure recovery request.

Here, it should be noted that the above apparatus provided in the present application can realize all the method steps realized by a network device in the above method embodiments and can achieve the same technical effect. For the same part and beneficial effect in the present embodiment as those in the method embodiments, details will be omitted here for the sake of redundancy.

FIG. 9 a schematic structural diagram of a terminal device according to an embodiment of the present application. As shown in FIG. 9, the terminal device 900 includes a transceiver 901, configured to receive and transmit data under the control of a processor 902.

In FIG. 9, a bus architecture can include any number of interconnected buses and bridges, specifically, through which various circuits of one or more processors represented by the processor 902 and a memory represented by a memory 903 are linked together. The bus architecture can also link various other circuits of, for example, a peripheral device, a voltage regulator, and a power management circuit, which are well known in the art. Therefore, further description will be omitted herein. The bus interface provides an interface. The transceiver 901 can be a plurality of elements, that is, including a transmitter and a receiver, and provides units for communicating with various other apparatuses over transmission media. These transmission media include wireless channels, wired channels, optical cables and other transmission media. For different user devices, a user interface 904 can also be an interface that can connect desired devices externally and internally. The connected devices include but are not limited to a keypad, a display, a speaker, a microphone, a joystick, and the like.

The processor 902 is responsible for managing the bus architecture and general processing, and the memory 903 can store data used by the processor 902 when performing an operation.

Optionally, the processor 902 can be a CPU (central processing unit), an ASIC (Application Specific Integrated Circuit, application specific integrated circuit), an FPGA (Field-Programmable Gate Array, field-programmable gate array) or a CPLD (Complex Programmable Logic Device, complex programmable logic device); the processor can also use a multi-core architecture.

The processor 902 is configured to execute, according to obtained executable instructions, any method related to the terminal device provided in the embodiments of the present application by calling a computer program stored in the memory 903. The processor and the memory can also be physically separated.

Specifically, when executing the program, the processor 902 implements steps of: receiving a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; and performing transmission failure recovery on the group of CORESETs according to the transmission failure recovery request.

Optionally, the performing the transmission failure recovery on the group of CORESETs according to the transmission failure recovery request includes: if transmission failure recovery reporting is performed for a CORESET group, performing CORESET-level transmission failure recovery on the group of CORESETs; or if transmission failure recovery reporting is not for a group of CORESETs, performing cell-level transmission failure recovery on a cell.

In a third aspect, the present application provides a transmission failure recovery apparatus, including: a determining module, configured to determine a reference signal corresponding to a group of control resource sets CORESETs or a transmission failure reference signal BFD RS set; and a transmitting module, configured to transmit a transmission failure recovery request to a network device when the reference signal meets a predefined condition, where the transmission failure recovery request is used for indicating a network device to perform transmission failure recovery on the group of CORESETs.

In a fourth aspect, the present application provides a transmission failure recovery apparatus, including: a receiving module, configured to receive a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; and a recovery module, configured to perform transmission failure recovery on the group of CORESETs according to the transmission failure recovery request.

In a fifth aspect, the present application provides a terminal device, including: a memory, a processor, and a program stored in the memory and running on the processor. The processor, when executing the program, implements steps of: determining a reference signal corresponding to a group of control resource sets CORESETs or a transmission failure reference signal BFD RS set; and transmitting a transmission failure recovery request to a network device if the reference signal meets a predefined condition, where the transmission failure recovery request is used for indicating a network device to perform transmission failure recovery on the group of CORESETs.

Optionally, if a network device configures one BFD RS set for the terminal device in a bandwidth part, the reference signal is a part of BFD RSs contained in the BFD RS set; and if a network device configures multiple BFD RS sets for the terminal device in a bandwidth part, the reference signal is all of the BFD RSs contained in one BFD RS set, and a different CORESET group corresponds to a different BFD RS set.

Optionally, the group of CORESETs corresponds to at least one reference signal, and the reference signal is at least one of the following signals: a reference signal, among reference signals monitored by the terminal device, associated with a transmission configuration indication TCI state for the group of CORESETs, where the group of CORESETs includes CORESETs with same first higher-layer parameter configuration; or a part of reference signals associated with a TCI state for CORESETs monitored by the terminal device.

Optionally, the transmission failure recovery request indicating a network device to perform the transmission failure recovery on the group of CORESETs includes at least one of the following manners: a signal type of the transmission failure recovery request indicative of a network device performing the transmission failure recovery on the group of CORESETs; a transmission resource of the transmission failure recovery request indicates a network device to perform the transmission failure recovery on the group of CORESETs; or the transmission failure recovery request carries indication information which is used for indicating a network device to perform the transmission failure recovery on the group of CORESETs.

Optionally, the indication information includes: identification information of the group of CORESETs and related information of a set of the reference signal corresponding to the group of CORESETs; where the related information of the set of the reference signal corresponding to the group of CORESETs is at least one of the following: a set index of a transmission failure reference signal BFD RS set of the reference signal corresponding to the group of CORESETs; an index of a reference signal in a BFD RS set of the reference signal corresponding to the group of CORESETs; or a value of a higher-layer parameter for a control resource set group CORESETs of the reference signal corresponding to the group of CORESETs.

Optionally, the transmission resource includes at least one of the following: a physical random access channel PRACH, a physical uplink control channel PUCCH or a physical uplink shared channel PUSCH; where the transmission resource of the transmission failure recovery request indicating a network device to perform the transmission failure recovery on the group of CORESETs includes at least one of the following: indicating, according to an association between the PRACH and a higher-layer parameter or a BFD RS set corresponding to the CORESET group with failed transmission, a network device to perform the transmission failure recovery on the CORESET group; or indicating a network device is indicated, according to an association between the PUCCH and a higher-layer parameter or a BFD RS set corresponding to the CORESET group with failed transmission, a network device to perform the transmission failure recovery on the CORESET group.

Optionally, a network device is indicated, respectively through a physical random access channel PRACH and a physical uplink shared channel PUSCH or medium access control control element MAC CE signaling, to perform transmission failure recovery on different CORESET groups; or a network device is indicated, respectively through the PRACH and a physical uplink control channel PUCCH, to perform transmission failure recovery on different CORESET groups; or a network device is indicated, respectively through the PUSCH or the MAC CE signaling and the PUCCH, to perform transmission failure recovery on different CORESET groups.

Optionally, a network device is indicated, through the PRACH, to perform transmission failure recovery on a CORESET group with a higher-layer parameter value of 0, and a network device is indicated, through the PUSCH or the MAC CE signaling, to perform transmission failure recovery on a CORESET group with a higher-layer parameter value of 1; and/or a network device is indicated, through the PRACH, to perform transmission failure recovery on all CORESET groups in a cell, and a network device is indicated, through the PUSCH or the MAC CE signaling, to perform transmission failure recovery on a CORESET group with a higher-layer parameter value of 1 or 0.

Optionally, a network device is indicated, through the PRACH, to perform transmission failure recovery on a CORESET group with a higher-layer parameter value of 0, and a network device is indicated, through the PUCCH, to perform transmission failure recovery on a CORESET group with a higher-layer parameter value of 1; and/or a network device is indicated, through the PRACH, to perform transmission failure recovery on all CORESET groups in a cell, and a network device is indicated, through the PUCCH, to perform transmission failure recovery on a CORESET group with a higher-layer parameter value of 1 or 0.

Optionally, a network device is indicated, through the PUCCH, to perform transmission failure recovery on a CORESET group with a higher-layer parameter value of 0, and a network device is indicated, through the PUSCH or the MAC CE signaling, to perform transmission failure recovery on a CORESET group with a higher-layer parameter value of 1; and/or a network device is indicated, through the PUCCH, to perform transmission failure recovery on a CORESET group with a higher-layer parameter value of 1, and a network device is indicated, through the PUSCH or the MAC CE signaling, to perform transmission failure recovery on a CORESET group with a higher-layer parameter value of 0.

Optionally, before determining the reference signal corresponding to the group of CORESETs, the following is further included: determining whether transmission failure recovery reporting is performed for a group of CORESETs; and if it is determined that the transmission failure recovery reporting is performed for a group of CORESETs, proceeding with execution of determining the reference signal corresponding to the group of CORESETs.

Optionally, the determining whether the transmission failure recovery reporting is performed for a group of CORESETs includes at least one of the following: determining, according to a value of a higher-layer parameter configured by a network device, that transmission failure recovery reporting is performed for a group of CORESETs; determining, according to the number of transmission failure reference signal sets corresponding to a bandwidth part configured by a network device, that transmission failure recovery reporting is performed for a group of CORESETs; or determining, according to the number of higher-layer parameter values for control resource sets CORESETs monitored by the terminal device, that transmission failure recovery reporting is performed for a group of CORESETs.

Here, it should be noted that the above apparatus provided in the present application can realize all the method steps realized by a terminal device in the above method embodiments and can achieve the same technical effect. For the same part and beneficial effect in the present embodiment as those in the method embodiments, details will be omitted here for the sake of redundancy.

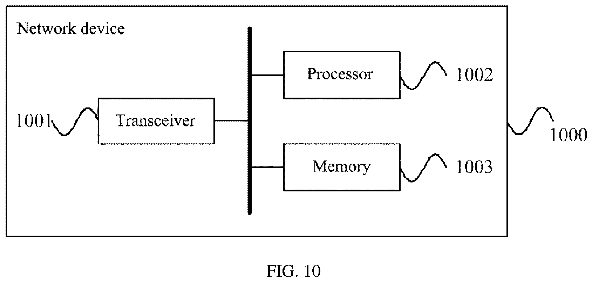

FIG. 10 is a schematic structural diagram of a network device according to an embodiment of the present application. As shown in FIG. 10, a network device 1000 includes a transceiver 1001, a processor 1002 and a memory 1003.

The transceiver 1001 is configured to receive and transmit data under the control of the processor 1002.

In FIG. 10, a bus architecture can include any number of interconnected buses and bridges, specifically, through which various circuits of one or more processors represented by the processor 1002 and a memory represented by the memory 1003 are linked together. The bus architecture can also link various other circuits of, for example, a peripheral device, a voltage regulator, and a power management circuit, which are well known in the art. Therefore, further description will be omitted herein. The bus interface provides an interface. The transceiver 1001 can be a plurality of elements, that is, including a transmitter and a receiver, and provides units for communicating with various other apparatuses over transmission media. These transmission media include wireless channels, wired channels, optical cables and other transmission media.

The processor 1002 is responsible for managing the bus architecture and general processing, and the memory 1003 can store data used by the processor 1002 when performing an operation.

The processor 1002 can be a central processing unit (CPU), an application specific integrated circuit (Application Specific Integrated Circuit, ASIC), a field-programmable gate array (Field-Programmable Gate Array, FPGA) or a complex programmable logic device (Complex Programmable Logic Device, CPLD). The processor can also use a multi-core architecture.

Specifically, when executing the program, the processor 1002 implements steps of: receiving a transmission failure recovery request, where the transmission failure recovery request is transmitted by the terminal device when the terminal device determines that a reference signal corresponding to a group of control resource sets CORESETs or a transmission failure reference signal BFD RS set meets a predefined condition; and performing transmission failure recovery on the group of CORESETs according to the transmission failure recovery request.

Optionally, the performing the transmission failure recovery on the group of CORESETs according to the transmission failure recovery request includes: if transmission failure recovery reporting is performed for a group of CORESETs, performing CORESET-level transmission failure recovery on the group of CORESETs; or if transmission failure recovery reporting is not for a group of CORESETs, performing cell-level transmission failure recovery on a cell.

Here, it should be noted that the above a network device provided in the present application can realize all the method steps realized by a network device in the above method embodiments and can achieve the same technical effect. For the same part and beneficial effect in the present embodiment as those in the method embodiments, details will be omitted here for the sake of redundancy.

An embodiment of the present application further provides a processor-readable storage medium in which a computer program is stored, where the computer program is configured to enable the processor to perform any method according to an embodiment of the present application, so that the processor can realize all the method steps realized by a terminal device and/or a network device in the above method embodiments and can achieve the same technical effect. For the same part and beneficial effect in the present embodiment as those in the method embodiments, details will be omitted here for the sake of redundancy.

In the above-described embodiments, it will be appreciated that the disclosed device and method may be implemented in other manners. For example, the described device embodiment is merely exemplary. For example, the division of modules is merely a logical function division, and there may be other divisions in actual implementations. For example, multiple modules may be combined or integrated into another system, or some features may be ignored or not performed. In addition, the mutual couplings or direct couplings or communication connections shown or discussed herein may be implemented through some interfaces. The indirect couplings or communication connections between the apparatuses or modules may be implemented in electronic, mechanical, or other forms.

In addition, functional modules in the embodiments of the present application may be integrated into one processing unit, or each of the modules may exist alone physically, or two or more modules are integrated into one unit. The unit integrated by the above modules may be implemented in a form of hardware, or may be implemented in a form of hardware and software functional units.

The integrated module implemented in a form of a software functional module may be stored in a memory-readable storage medium. The above-described software functional module is stored in a storage medium, and includes several instructions enabling a computer device (which may be a personal computer, a server, a network device, or the like) or a processor (processor) to perform some steps of the methods described in the embodiments of the present application.

It will be appreciated that the above processor may be a central processing unit (Central Processing Unit, CPU for short), or a digital event processor (Digital Signal Processor, DSP for short), or an application specific integrated circuit (Application Specific Integrated Circuit, ASIC for short), or the like. The general-purpose processor may be a microprocessor or the processor may also be any conventional processor or the like. The steps of the methods disclosed in combination with the present invention can be directly embodied as being executed by a hardware processor, or being executed by a combination of hardware and software modules in the processor.

The memory may include a high-speed RAM memory, or a non-volatile memory NVM such as at least one disk memory, or a USB flash disk, or a mobile hard disk, or a read-only memory, or a magnetic disk, or an optical disk.

The above-described storage medium can be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, an optical disk, or the like. The storage medium may be any available medium that can be accessed by a general-purpose or dedicated computer.

Those of ordinarily skill in the art can understand that all or part of the steps to implement the above method embodiments can be performed through hardware related to program instructions. The foregoing program can be stored in a memory-readable storage medium. When the program is executed, the steps of the above method embodiments are executed. The foregoing storage media include various media in which program codes can be stored, such as a ROM, a RAM, a magnetic disc or an optical disc.

Finally, it should be noted that the above embodiments are merely intended for describing the technical solutions of the present application, rather than limiting the present application. Although the present application has been described in detail with reference to the foregoing embodiments, those of ordinarily skill in the art should understand that they may still make modifications to the technical solutions described in the foregoing embodiments, or make equivalent replacements to some or all technical features thereof; however, these modifications or replacements do not make the essence of the corresponding technical solutions depart from the scope of the technical solutions of the embodiments of the present application.

## Claims

1. A transmission failure recovery method, applied to a terminal device, comprising:
determining a reference signal corresponding to a group of control resource sets CORESETs or a transmission failure reference signal BFD RS set;
transmitting a transmission failure recovery request to a network device if the reference signal meets a predefined condition, wherein the transmission failure recovery request is used for indicating the network device to perform transmission failure recovery on the group of CORESETs.

2. The method according to claim 1, wherein if the network device configures one BFD RS set for the terminal device in a bandwidth part, the reference signal is a part of BFD RSs contained in the BFD RS set;
if the network device configures multiple BFD RS sets for the terminal device in a bandwidth part, the reference signal is all of the BFD RSs contained in one BFD RS set, and a different CORESET group corresponds to a different BFD RS set.

3. The method according to claim 1, wherein the group of CORESETs corresponds to at least one reference signal, and the reference signal is at least one of the following signals:
a reference signal, among reference signals monitored by the terminal device, associated with a transmission configuration indication TCI state for the group of CORESETs, wherein the group of CORESETs comprises CORESETs with same first higher-layer parameter configuration; or
a part of reference signals associated with a TCI state for CORESETs monitored by the terminal device.

4. The method according to claim 1, wherein the transmission failure recovery request indicating the network device to perform the transmission failure recovery on the group of CORESETs comprises at least one of the following manners:
a signal type of the transmission failure recovery request indicates the network device to perform the transmission failure recovery on the group of CORESETs;
a transmission resource of the transmission failure recovery request indicates the network device to perform the transmission failure recovery on the group of CORESETs; or
the transmission failure recovery request carries indication information which is used for indicating the network device to perform the transmission failure recovery on the group of CORESETs.

5. The method according to claim 4, wherein the indication information comprises:
identification information of the group of CORESETs and related information of a set of the reference signal corresponding to the group of CORESETs; wherein the related information of the set of the reference signal corresponding to the group of CORESETs is at least one of the following:
a set index of a transmission failure reference signal BFD RS set of the reference signal corresponding to the group of CORESETs;
an index of a reference signal in a BFD RS set of the reference signal corresponding to the group of CORESETs; or
a value of a higher-layer parameter for a control resource set group CORESETs of the reference signal corresponding to the group of CORESETs.

6. The method according to claim 4, wherein the transmission resource comprises at least one of the following:
a physical random access channel PRACH, a physical uplink control channel PUCCH or a physical uplink shared channel PUSCH; wherein the transmission resource of the transmission failure recovery request indicating the network device to perform the transmission failure recovery on the group of CORESETs comprises at least one of the following:
indicating, according to an association between the PRACH and a higher-layer parameter or a BFD RS set corresponding to the CORESET group with failed transmission, the network device to perform the transmission failure recovery on the CORESET group; or
indicating, according to an association between the PUCCH and a higher-layer parameter or a BFD RS set corresponding to the CORESET group with failed transmission, the network device to perform the transmission failure recovery on the CORESET group.

7. The method according to claim 4, wherein the network device is indicated, respectively through a physical random access channel PRACH and a physical uplink shared channel PUSCH or medium access control control element MAC CE signaling, to perform transmission failure recovery on different CORESET groups; or
the network device is indicated, respectively through the PRACH and a physical uplink control channel PUCCH, to perform transmission failure recovery on different CORESET groups; or
the network device is indicated, respectively through the PUSCH or the MAC CE signaling and the PUCCH, to perform transmission failure recovery on different CORESET groups.

8. The method according to claim 7, wherein the network device is indicated, through the PRACH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or
the network device is indicated, through the PRACH, to perform transmission failure recovery on all CORESET groups in a cell, and the network device is indicated, through the PUSCH or the MAC CE signaling, to perform transmission failure recovery on a CORESET group with a higher-layer parameter value of 1 or 0.

9. The method according to claim 7, wherein the network device is indicated, through the PRACH, to perform transmission failure recovery on a CORESET group with a higher-layer parameter value of 0, and the network device is indicated, through the PUCCH, to perform transmission failure recovery on a CORESET group with a higher-layer parameter value of 1; and/or
the network device is indicated, through the PRACH, to perform transmission failure recovery on all CORESET groups in a cell, and the network device is indicated, through the PUCCH, to perform transmission failure recovery on a CORESET group with a higher-layer parameter value of 1 or 0.

10. The method according to claim 7, wherein the network device is indicated, through the PUCCH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or
the network device is indicated, through the PUCCH, to perform transmission failure recovery on a CORESET group with a higher-layer parameter value of 1, and the network device is indicated, through the PUSCH or the MAC CE signaling, to perform transmission failure recovery on a CORESET group with a higher-layer parameter value of 0.

11. The method according to any one of claims 1 to 10, before determining the reference signal corresponding to the group of CORESETs, further comprising:
determining whether transmission failure recovery reporting is performed for a group of CORESETs;
if the transmission failure recovery reporting is determined to be performed for a group of CORESETs, proceeding with execution of determining the reference signal corresponding to the group of CORESETs.

12. The method according to claim 11, wherein the determining whether the transmission failure recovery reporting is performed for a group of CORESETs comprises at least one of the following:
determining, according to a value of a higher-layer parameter configured by the network device, that transmission failure recovery reporting is performed for a group of CORESETs;
determining, according to the number of transmission failure reference signal sets corresponding to a bandwidth part configured by the network device, that transmission failure recovery reporting is performed for a group of CORESETs; or
determining, according to the number of higher-layer parameter values for control resource sets CORESETs monitored by the terminal device, that transmission failure recovery reporting is performed for a group of CORESETs.

13. A transmission failure recovery method, applied to a network device, comprising: receiving a transmission failure recovery request, wherein the transmission failure recovery request is transmitted by the terminal device when the terminal device determines that a reference signal corresponding to a group of control resource sets CORESETs or a transmission failure reference signal BFD RS set meets a predefined condition;
performing transmission failure recovery on the group of CORESETs according to the transmission failure recovery request.

14. The method according to claim 13, wherein the performing the transmission failure recovery on the group of CORESETs according to the transmission failure recovery request comprises:
if transmission failure recovery reporting is performed for a group of CORESETs, performing CORESET-level transmission failure recovery on the group of CORESETs; or
if transmission failure recovery reporting is not for a group of CORESETs, performing cell-level transmission failure recovery on a cell.

15. A transmission failure recovery apparatus, comprising:
a determining module, configured to determine a reference signal corresponding to a group of control resource sets CORESETs or a transmission failure reference signal BFD RS set; and
a transmitting module, configured to transmit a transmission failure recovery request to a network device when the reference signal meets a predefined condition, wherein the transmission failure recovery request is used for indicating the network device to perform transmission failure recovery on the group of CORESETs.

16. A transmission failure recovery apparatus, comprising:
a receiving module, configured to receive a transmission failure recovery request, wherein the transmission failure recovery request is transmitted by the terminal device when the terminal device determines that a reference signal corresponding to a group of control resource sets CORESETs or a transmission failure reference signal BFD RS set meets a predefined condition; and
a recovery module, configured to perform transmission failure recovery on the group of CORESETs according to the transmission failure recovery request.

17. A terminal device, comprising: a memory, a processor, and a program stored in the memory and running on the processor, wherein the processor, when executing the program, implements the following steps:
determining a reference signal corresponding to a group of control resource sets CORESETs or a transmission failure reference signal BFD RS set;
transmitting a transmission failure recovery request to a network device if the reference signal meets a predefined condition, wherein the transmission failure recovery request is used for indicating the network device to perform transmission failure recovery on the group of CORESETs.

18. The terminal device according to claim 17, wherein if the network device configures one BFD RS set for the terminal device in a bandwidth part, the reference signal is a part of BFD RSs contained in the BFD RS set;
if the network device configures multiple BFD RS sets for the terminal device in a bandwidth part, the reference signal is all of the BFD RSs contained in one BFD RS set, and a different CORESET group corresponds to a different BFD RS set.

19. The terminal device according to claim 17, wherein the group of CORESETs corresponds to at least one reference signal, and the reference signal is at least one of the following signals:
a reference signal, among reference signals monitored by the terminal device, associated with a transmission configuration indication TCI state for the group of CORESETs, wherein the group of CORESETs comprises CORESETs with same first higher-layer parameter configuration; or
a part of reference signals associated with a TCI state for CORESETs monitored by the terminal device.

20. The terminal device according to claim 17, wherein the transmission failure recovery request indicating the network device to perform the transmission failure recovery on the group of CORESETs comprises at least one of the following manners:
a signal type of the transmission failure recovery request indicates the network device to perform the transmission failure recovery on the group of CORESETs;
a transmission resource of the transmission failure recovery request indicates the network device to perform the transmission failure recovery on the group of CORESETs; or
the transmission failure recovery request carries indication information which is used for indicating the network device to perform the transmission failure recovery on the group of CORESETs.

21. The terminal device according to claim 20, wherein the indication information comprises:
identification information of the group of CORESETs and related information of a set of the reference signal corresponding to the group of CORESETs; wherein the related information of the set of the reference signal corresponding to the group of CORESETs is at least one of the following:
a set index of a transmission failure reference signal BFD RS set of the reference signal corresponding to the group of CORESETs;
an index of a reference signal in a BFD RS set of the reference signal corresponding to the group of CORESETs; or
a value of a higher-layer parameter for a control resource set group CORESETs of the reference signal corresponding to the group of CORESETs.

22. The terminal device according to claim 21, wherein the transmission resource comprises at least one of the following:
a physical random access channel PRACH, a physical uplink control channel PUCCH or a physical uplink shared channel PUSCH; wherein the transmission resource of the transmission failure recovery request indicating the network device to perform the transmission failure recovery on the group of CORESETs comprises at least one of the following:
indicating, according to an association between the PRACH and a higher-layer parameter or a BFD RS set corresponding to the CORESET group with failed transmission, the network device to perform the transmission failure recovery on the CORESET group; or
indicating, according to an association between the PUCCH and a higher-layer parameter or a BFD RS set corresponding to the CORESET group with failed transmission, the network device to perform the transmission failure recovery on the CORESET group.

23. The terminal device according to claim 21, wherein the network device is indicated, respectively through a physical random access channel PRACH and a physical uplink shared channel PUSCH or medium access control control element MAC CE signaling, to perform transmission failure recovery on different CORESETs; or
the network device is indicated, respectively through the PRACH and a physical uplink control channel PUCCH, to perform transmission failure recovery on different CORESETs; or
the network device is indicated, respectively through the PUSCH or the MAC CE signaling and the PUCCH, to perform transmission failure recovery on different CORESET groups.

24. The terminal device according to claim 23, wherein the network device is indicated, through the PRACH, to perform transmission failure recovery on a CORESET with a higher-layer parameter value of 0, and the network device is indicated, through the PUSCH or the MAC CE signaling, to perform transmission failure recovery on a CORESET with a higher-layer parameter value of 1; and/or
the network device is indicated, through the PRACH, to perform transmission failure recovery on all CORESETs in a cell, and the network device is indicated, through the PUSCH or the MAC CE signaling, to perform transmission failure recovery on a CORESET with a higher-layer parameter value of 1 or 0.

25. The terminal device according to claim 23, wherein the network device is indicated, through the PRACH, to perform transmission failure recovery on a CORESET group with a higher-layer parameter value of 0, and the network device is indicated, through the PUCCH, to perform transmission failure recovery on a CORESET group with a higher-layer parameter value of 1; and/or
the network device is indicated, through the PRACH, to perform transmission failure recovery on all CORESET groups in a cell, and the network device is indicated, through the PUCCH, to perform transmission failure recovery on a CORESET group with a higher-layer parameter value of 1 or 0.

26. The terminal device according to claim 23, wherein the network device is indicated, through the PUCCH, to perform transmission failure recovery on a CORESET group with a higher-layer parameter value of 0, and the network device is indicated, through the PUSCH or the MAC CE signaling, to perform transmission failure recovery on a CORESET group with a higher-layer parameter value of 1; and/or
the network device is indicated, through the PUCCH, to perform transmission failure recovery on a CORESET group with a higher-layer parameter value of 1, and the network device is indicated, through the PUSCH or the MAC CE signaling, to perform transmission failure recovery on a CORESET group with a higher-layer parameter value of 0.

27. The terminal device according to any one of claims 17 to 26, before determining the reference signal corresponding to the group of CORESETs, further comprising:
determining whether transmission failure recovery reporting is performed for a group of CORESETs;
if the transmission failure recovery reporting is determined to be performed for a group of CORESETs, proceeding with execution of determining the reference signal corresponding to the group of CORESETs.

28. The terminal device according to claim 27, wherein the determining whether the transmission failure recovery reporting is performed for the group of CORESETs comprises at least one of the following:
determining, according to a value of a higher-layer parameter configured by the network device, that transmission failure recovery reporting is performed for a group of CORESETs;
determining, according to the number of transmission failure reference signal sets corresponding to a bandwidth part configured by the network device, that transmission failure recovery reporting is performed for a group of CORESETs; or
determining, according to the number of higher-layer parameter values for control resource sets CORESETs monitored by the terminal device, that transmission failure recovery reporting is performed for a group of CORESETs.

29. A network device, comprising: a memory, a processor, and a program stored in the memory and running on the processor, wherein the processor, when executing the program, implements the following steps:
receiving a transmission failure recovery request, wherein the transmission failure recovery request is transmitted by the terminal device when the terminal device determines that a reference signal corresponding to a group of control resource sets CORESETs or a transmission failure reference signal BFD RS set meets a predefined condition; and
performing transmission failure recovery on the group of CORESETs according to the transmission failure recovery request.

30. The network device according to claim 29, wherein the performing the transmission failure recovery on the group of CORESETs according to the transmission failure recovery request comprises:
if transmission failure recovery reporting is performed for a group of CORESETs group, performing CORESET-level transmission failure recovery on the group of CORESETs; or
if transmission failure recovery reporting is not for a group of CORESETs, performing cell-level transmission failure recovery on a cell.

31. A processor-readable storage medium, storing a computer program, wherein the computer program is configured to enable the processor to perform the method according to any one of claims 1 to 14.
